# EUROPEAN PATENT SPECIFICATION

(11) **EP 0 606 331 B1**
(45) Date of publication and mention of the grant of the patent: **26.03.1997**
(21) Application number: 92920675.3
(22) Date of filing: 01.10.1992
(51) Int. Cl.: H01S 3/06, G02B 6/34

(54) **AN OPTICAL AMPLIFIER**
Optischer Verstärker
AMPLIFICATEUR OPTIQUE

(30) Priority: 01.10.1991 GB 9120925
(43) Date of publication of application: 20.07.1994
(73) Proprietor: BRITISH TELECOMMUNICATIONS public limited company, London EC1A 7AJ (GB)
(72) Inventor: CASSIDY, Stephen, Anthony, Ipswich Suffolk IP4 3N6 (GB); WILKINSON, Mark, Robert, Ipswich Suffolk, IP4 5UA (GB)
(74) Representative: Roberts, Simon Christopher
(86) International application number: GB9201808
(87) International publication number: WO9307664

(56) References cited:
- EP-A- 0 438 759
- IEEE PHOTONICS TECHNOLOGY LETTERS vol. 3, no. 2, February 1991, New York, US, pp. 118-120; M. TACHIBANA et al.: 'Erbium-doped fiber amplifier with flattened gain spectrum'
- OPTICAL FIBER COMMUNICATION CONFERENCE, TECHNICAL DIGEST SERIES vol. 1, 22 January 1990, Washington, US, p. 27; P. YENNADHIOU et al.: 'D-fiber grating reflection filters (Pap. TUG 4)'
- JOURNAL OF LIGHTWAVE TECHNOLOGY, vol. 3, no. 5, October 1985, New York, US, pp. 1041-1043; W.V. SORIN et al.: 'A single-mode fiber evanescent grating reflector'

## Description

This invention relates to an optical amplifier, and in particular to an optical amplifier which includes a doped optical waveguide for providing gain to optical signals propagating along the waveguide within an operating band of wavelengths.

Optical amplifiers of this type are well known, and are very attractive devices for optical communications networks, particularly when based on optical fibre waveguides as they are readily spliced to fibres used for optical transmission. It appears likely that they will becomes widely used in place of opto-electronic repeaters in long distance optical fibre lengths, for example. Some such optical amplifiers have a gain peak within the gain spectrum. For wavelength division multiplexing, a gain spectrum which has a gain peak is not ideal where cascades of amplifiers are to used as this may result in large differences in gain across the wavelength band. If such large differences are to be avoided, it is necessary to operate in a band of wavelengths which does not include a gain peak. This reduces the useful gain band of an optical amplifier.

An object of the present invention is to provide an optical amplifier with a flatter gain spectrum.

An optical amplifier in accordance with the preamble of claim 1 is known from IEEE Photonics Technology Letters, vol. 3, no. 2, February 1991, pages 118-120.

The present invention provides an optical amplifier including an optical fibre waveguide containing a laser dopant having an operating band for amplifying optical signals propagating in said waveguide, said laser dopant providing a gain peak within said operating band, a filter for providing loss in signals within said gain peak;
characterised in that the fibre waveguide and the filter are optically coupled in series whereby optical signals propagate first through the fibre waveguide and then through the filter, wherein the filter takes the form of a second optical fibre waveguide having a surface close to its waveguiding core and a grating formed on or in contact with said surface whereby the grating interacts with the optical field of a signal propagating through the second optical waveguide, said interaction coupling optical radiation within the gain peak out of the second waveguide whereby signals within the gain peak are attenuated.

The waveguide filter can provide flattening of the gain spectrum because the transmission profile of such a grating, overlaid on a waveguide, exhibits attenuation of optical signals to wavelengths shorter than the resonant reflection wavelength of the grating.

Preferably the grating is configured to have a resonant reflection wavelength substantially equal to, or greater than, the wavelength of the gain peak, so that the short wavelength attenuation associated with the filter will provide attenuation to the gain peak, thereby producing a flatter gain spectrum. Hence it is possible to use a grating, which when used as a narrow-band reflection filter has a reflection bandwidth of say 1. 28 Angstroms, to obtain satisfactory flattening over a relatively broad spectrum gain peak of 20nm for example.

Advantageously the grating is angled relative to the second waveguide so as to substantially suppress counter-propagating radiation at the resonant reflection wavelength of the grating. The operation of the amplifier is thus not disturbed by optical signals at the resonant reflection wavelength being reflected back into the first doped waveguide. Counter-propagating radiation is, in general, undesirable in an optical communications system since it requires optical sources in the system to be optically isolated, and may contribute to crosstalk in duplex systems.

As the grating is rotated away from a position where the grating lines are perpendicular to the waveguide, the effective pitch of the grating experienced by optical signals travelling in the waveguide will increase. This will cause the resonant reflection wavelength of the grating, that is the wavelength at which the Bragg condition is met, to increase, and the wavelength range at which optical radiation is coupled out of the second waveguide to decrease. Hence the transmission loss of the waveguide filter can be chosen so as to optimize the gain spectrum of the amplifier.

The optical amplifier may be made from a doped optical fibre but may be any other type of optical waveguide, for example a planar waveguide.

A particularly convenient form of optical waveguide for the waveguide filter is an optical fibre having a substantially D-shaped cross-section (commonly and hereafter referred to as a "D-fibre"). Such a fibre has a planar surface close to the waveguiding core of the optical fibre so that an optical grating formed on this pl-anar surface or pressed against the surface will interact with an optical field propagating through the fibre to provide the required diffraction. Conveniently the D-fibre may be mounted in a thermoplastic substrate. A method of so mounting a D-fibre is described in the applicant's published patent application WO 89/11965 published 14th December 1989.

The grating may be formed by etching the grating into a silica wafer using known electron beam lithography techniques, and the waveguide filter may then be formed by pressing the silica wafer against the waveguide.

A specific embodiment of the present invention will now be described, by way of example, with reference to the accompanying drawings, in which:
Figure 1 a graph of the spontaneous emission measurements on an erbium-doped fibre amplifier which forms part of the embodiment of Figure 2;
Figure 2 is a schematic diagram of an optical amplifier according to the present invention;
Figure 3 is a graph showing the transmission characteristics of the grating filter of the embodiment of Figure 2; and
Figure 4 is a graph showing the gain spectrum of the optical amplifier of Figure 2.

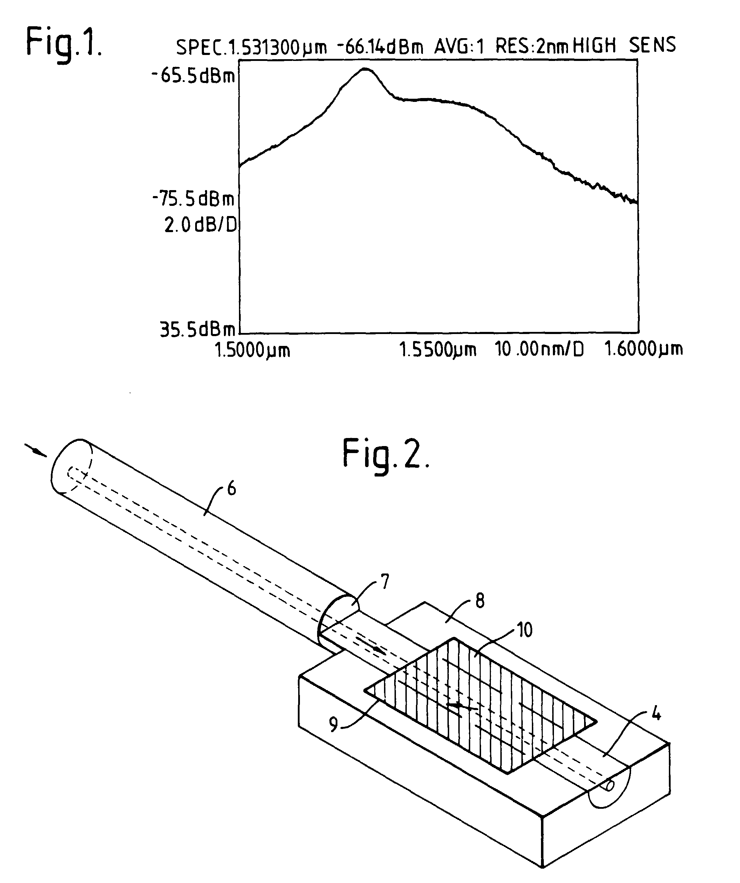

Referring to the drawings, Figure 1 shows the gain spectrum of an erbium-doped optical fibre amplifier. This shows a gain peak centred at about 1.54µm, the gain peak reducing the usable part of the gain spectrum to wavelengths longer than the long wavelength side of this gain peak, that is to about 20nm.

Figure 2 shows a D-fibre 4, which may be made by removing a section of cladding from an optical fibre preform to leave a flat surface close to the core. This preform is then drawn to give a long length of single-mode fibre with a D-shaped cross-section. A short length (of the order of 20mm) of this D-fibre is then fusion spliced to a standard single-mode fibre 6, at a splice 7, and then press moulded, against a heated optical flat (not shown), into a polymer thermoplastic substrate 8, as described in the above-referenced patent application.

A grating 10 (see Figure 2) is then defined using electron beam lithography on a silica wafer 9 coated in photoresist. The grating 10 is subsequently etched into the silica itself to give a surface relief structure with a depth of about 0.25µm and a pitch of about 0. 532 µm.

To construct the filter, the D-fibre substrate 8 is mounted in a brass package (not shown), and the grating is placed in contact with the flat surface of the fibre 4 at an angle of about 3°. A layer of silicone rubber is used between the grating 10 and the lid of the package so that the grating is pressed into contact with the fibre 4 when the lid is screwed down.

Fibre grating devices such as couplers and reflection filters have been reported previously (see for example Yennadhiou, P and Cassidy, S A: "D-Fibre Grating Reflection Filters" OFC 1990). For such a reflection filter, the grating lines are perpendicular to the fibre, and give a Bragg reflection which is coupled into the counter-propagating fibre mode. The grating of the present invention is used in transmission mode, and is configured to suppress the resonant reflection wavelength of the grating. Light at wavelengths shorter than the resonant reflection wavelength is coupled out of the fibre, either up through the grating itself into radiation modes, or down into cladding modes. This results in a transmission filter with loss at the wavelengths which are coupled into radiation or cladding modes, and hence which provides loss at shorter wavelengths than the resonant reflection wavelength. The wavelength at which this loss occurs is dependent on the grating pitch and on the angle of the fibre 4 to the grating 10, and can thus be chosen to coincide with the gain peak 2 of the amplifier.

In this embodiment the pitch of the grating is chosen to be about 0.532 µm to give a resonant reflection wavelength of about 1.54 µm when the grating lines are perpendicular to the waveguide. The resonant reflection wavelength is increased by about 2nm by rotating the grating by about 3° relative to the waveguide. At an angle of about 3° the counter-propagating radiation at the resonant reflection wavelength was found to be substantially supressed.

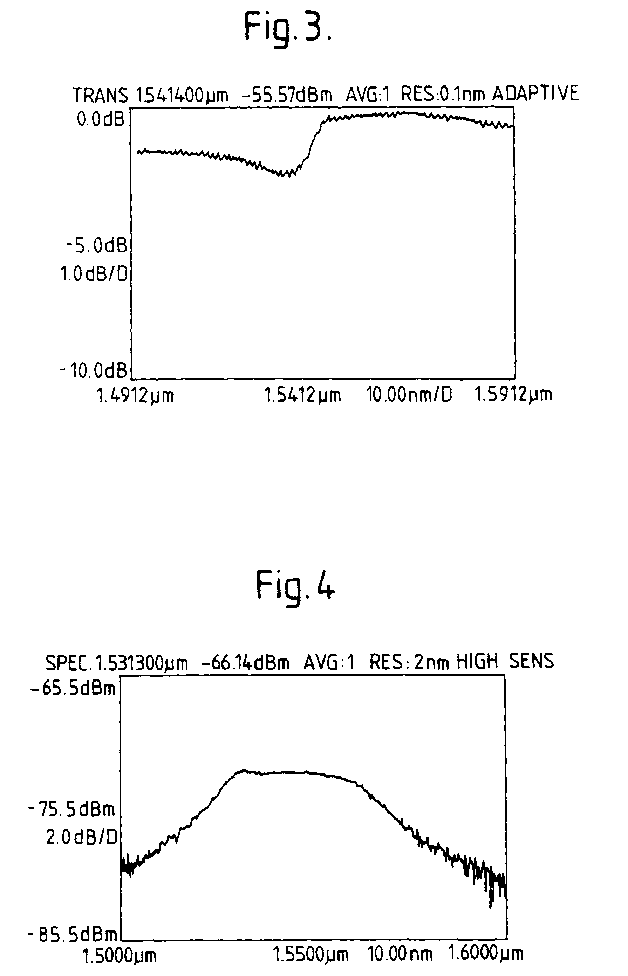

Figure 3 shows the transmission characteristics of the waveguide filter of Figure 2, these characteristics being determined by monitoring the transmission of the filter using an ELED and optical spectrum analyser. Tuning of the resonant reflection wavelength results in a slight reduction of filter depth, because the interaction length of the grating (that is to say the length of the fibre in contact with the grating) is limited by its width, which in this case is approximately 1mm.

Once a suitable filter transmission characteristic is obtained, it can be tested by measuring the spontaneous emission from a short length of the optical amplifier, in this case an erbium-doped silica fibre, pumped with a 980nm diode laser (not shown).

Figure 4 shows the spectrum after the filter is spliced onto the end of the doped fibre. Clearly, the filter has improved the flatness to within about 0.5 dB over a 30nm span. The excess loss of 4 to 6 dB is mostly due to D-fibre to circular fibre splice losses. This could be reduced, as a more typical loss for a D-fibre substrate is 2 dB.

It will be apparent that modifications to the specific embodiment can be made. In particular the preferred angle, of 3°, of the grating to the second waveguide, although theoretically predictable, is ultimately chosen for a particular type of amplifier and system by trial and error. As will be evident to the skilled person in this field the choice will depend, among other criteria, on the refractive index profile of the D-fibre, the structure of the grating, the distance of the core of the D-fibre from its planar surface, the type of doped waveguide, the wavelength of operation of the system, and the susceptibility of the system to counter-propagating radiation. It is estimated that the useful range of angles is from 1° to 10°.

## Claims

1. An optical amplifier including:-
a) an optical fibre waveguide (6) containing a laser dopant having an operating band for amplifying optical signals propagating in said waveguide, said laser dopant providing a gain peak within said operating band, and
b) a filter for providing loss in signals within said gain peak;
characterised in that the fibre waveguide and the filter are optically coupled in series whereby optical signals propagate first through the fibre waveguide and then through the filter, wherein the filter takes the form of a second optical fibre waveguide (4) having a surface close to its waveguiding core and a grating (10) formed on or in contact with said surface whereby the grating interacts with the optical field of a signal propagating through the second optical waveguide, said interaction coupling optical radiation within the gain peak out of the second waveguide whereby signals within the gain peak are attenuated.

2. An amplifier according to claim 1, wherein the second fibre waveguide has a D-shaped cross section said cross section providing a planar surface close to the waveguiding core of the fibre, the grating being etched on or in contact with said planar surface.

3. An optical amplifier according to either claim 1 or claim 2, wherein the grating is etched into a substrate (9).

4. An optical amplifier according to claim 3, in which the substrate is a silica substrate.

5. An optical amplifier according anyone of the preceding claims, in which the grating is angled relative to the axis of the second waveguide so as substantially to suppress counter propagating radiation back into the doped optical waveguide.

6. An optical amplifier as claimed in claim 5, in which the angle between the perpendicular to the grating lines and the axis of the second fibre waveguide is between one degree and ten degrees.

7. An optical amplifier according to claim 6, in which the angle between the perpendicular to the grating lines and axis of the second waveguide is substantially three degrees.

8. An optical amplifier according to any one of the preceding claims, in which the grating is configured to have a resonant reflection wavelength sustantially equal to or greater than, the wavelength of the gain peak.

9. An optical amplifier according to any one of the preceding claims, wherein the laser dopant is erbium.

## Patentansprüche

1. Optischer Verstärker mit:
a) einem Wellenleiter (6) aus einer optischen Faser, die einen Laserdotierungsstoff enthält, der ein Betriebsband zur Verstärkung optischer Signale hat,
die sich im Wellenleiter ausbreiten, wobei der Laserdotierungsstoff im Betriebsband eine Verstärkungsspitze aufweist, und b) einem Filter zum Herbeiführen von Verlusten im Signal innerhalb der Verstärkungsspitze;
dadurch gekennzeichnet, daß
der Faserwellenleiter und die Filter optisch in Serie geschaltet sind, wodurch optische Signale sich zuerst durch den Faserwellenleiter und dann durch den Filter ausbreiten, wobei der Filter in Form eines zweiten Wellenleiters (4) mit einer optischen Faser vorliegt, die nahe an ihrem wellenleitenden Kern eine Oberfläche hat sowie ein Gitter (10), das auf oder in Kontakt mit der Oberfläche ausgebildet ist, wodurch das Gitter mit dem optischen Feld eines Signals wechselwirkt, das sich durch den zweiten optischen Wellenleiter ausbreitet, wobei die Wechselwirkung optische Strahlung innerhalb der Verstärkungsspitze aus dem zweiten Wellenleiter auskoppelt, wodurch Signale innerhalb der Verstärkungsspitze gedämpft werden.

2. Verstärker nach Anspruch 1, bei dem der zweite Faserwellenleiter einen D-förmigen Querschnitt hat, wobei der Querschnitt eine ebene Oberfläche in der Nähe des wellenleitenden Kerns der Faser hat und das Gitter auf oder in Kontakt mit der flachen Oberfläche geätzt ist.

3. Optischer Verstärker nach Anspruch 1 oder 2, bei dem das Gitter in ein Substrat (9) geätzt ist.

4. Optischer Verstärker nach Anspruch 3, bei dem das Substrat ein Silicasubstrat ist.

5. Optischer Verstärker nach einem der vorhergehenden Ansprüche, bei dem das Gitter einen Winkel bezüglich der Achse des zweiten Wellenleiters derart aufweist, daß Strahlung, die sich gegenläufig zurück in den dotierten optischen Wellenleiter ausbreitet, im wesentlichen unterdrückt wird.

6. Optischer Verstärker nach Anspruch 5, bei dem der Winkel zwischen dem Lot auf die Gitterlinien und der Achse des zweiten Wellenleiters zwischen einem Grad und zehn Grad liegt.

7. Optischer Verstärker nach Anspruch 6, bei dem der Winkel zwischen dem Lot auf die Gitterlinien und der Achse des zweiten Wellenleiters in etwa drei Grad ist.

8. Optischer Verstärker nach einem der vorhergehenden Ansprüche, bei dem das Gitter so gestaltet ist, daß es eine Resonanzreflektionswellenlänge hat, die im wesentlichen gleich oder größer als die Wellenlänge der Verstärkungsspitze ist.

9. Optischer Verstärker nach einem der vorhergehenden Ansprüche, bei dem der Laserdotierungsstoff Erbium ist.

## Revendications

1. Amplificateur optique comprenant :
a) un guide d'onde à fibre optique (6) contenant un dopant de laser présentant une bande de fonctionnement destiné à amplifier des signaux optiques se propageant dans ledit guide d'onde, ledit dopant de laser procurant une crête de gain à l'intérieur de ladite bande de fonctionnement, et
b) un filtre destiné à procurer des pertes des signaux dans les limites de ladite crête de gain,
caractérisé en ce que le guide d'onde à fibre et le filtre sont couplés optiquement en série d'où il résulte que des signaux optiques se propagent d'abord au travers du guide d'onde à fibre puis au travers du filtre, dans lequel le filtre prend la forme d'un second guide d'onde à fibre optique (4) présentant une surface proche de son coeur de guidage d'onde et un réseau de diffraction (10) formé sur ladite surface, ou en contact avec celle-ci, d'où il résulte que le réseau de diffraction interagit avec le champ optique d'un signal se propageant au travers du second guide d'onde optique, ladite interaction couplant le rayonnement optique dans les limites de la crête de gain, en sortie du second guide d'onde, d'où il résulte que des signaux dans les limites de la crête de gain se trouvent atténués.

2. Amplificateur selon la revendication 1, dans lequel le second guide d'onde à fibre présente une section transversale en forme de D, ladite section transversale procurant une surface plane proche du coeur de guidage d'onde de la fibre, le réseau de diffraction étant gravé dans ladite surface plane, ou en contact avec celle-ci.

3. Amplificateur optique selon soit la revendication 1, soit la revendication 2, dans lequel le réseau de diffraction est gravé dans un substrat (9).

4. Amplificateur optique selon la revendication 3, dans lequel le substrat est un substrat de silice.

5. Amplificateur optique selon l'une quelconque des revendications précédentes, dans lequel le réseau de diffraction est placé en faisant un angle relativement à l'axe du second guide d'onde de façon à supprimer pratiquement le rayonnement de contre-propagation en retour dans le guide d'onde optique dopé.

6. Amplificateur optique selon la revendication 5, dans lequel l'angle entre la perpendiculaire aux lignes du réseau de diffraction et l'axe du second guide d'onde à fibre est situé entre un degré et dix degrés.

7. Amplificateur optique selon la revendication 6, dans lequel l'angle entre la perpendiculaire aux lignes du réseau de diffraction et l'axe du second guide d'onde est pratiquement de trois degrés.

8. Amplificateur optique selon l'une quelconque des revendications précédentes, dans lequel le réseau de diffraction est configuré pour présenter une longueur d'onde de réflexion résonnante substantiellement supérieure ou égale à la longueur d'onde de la crête de gain.

9. Amplificateur optique selon l'une quelconque des revendications précédentes, dans lequel le dopant du laser est de l'erbium.
